# EUROPÄISCHE PATENTSCHRIFT

(11) **EP 2 446 390 B1**
(45) Veröffentlichungstag und Bekanntmachung des Hinweises auf die Patenterteilung: **16.11.2016**
(21) Anmeldenummer: 10717073.0
(22) Anmeldetag: 31.03.2010
(51) Int. Cl.: G06F 21/30, G06F 21/31, H04L 9/08, H04L 9/32, H04L 29/06

(54) **SYSTEM UND VERFAHREN ZUR ZUVERLÄSSIGEN AUTHENTISIERUNG EINES GERÄTES**
SYSTEM AND METHOD FOR RELIABLY AUTHENTICATING AN APPLIANCE
SYSTÈME ET PROCÉDÉ POUR AUTHENTIFIER DE MANIÈRE FIABLE UN APPAREIL

(30) Priorität: 23.06.2009 DE 102009030019
(43) Veröffentlichungstag der Anmeldung: 02.05.2012
(73) Patentinhaber: Siemens Aktiengesellschaft, 80333 München (DE)
(72) Erfinder: FALK, Rainer, 85435 Erding (DE); FRIES, Steffen, 85598 Baldham (DE)
(86) Internationale Anmeldenummer: PCT/EP2010/054300
(87) Internationale Veröffentlichungsnummer: WO 2010/149400

(56) Entgegenhaltungen:
- MENEZES A ET AL: "Handbook of Applied Cryptography , IDENTIFICATION AND ENTITY AUTHENTICATION" 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP002262234 ISBN: 978-0-8493-8523-0 Absatz [10.3] Absatz [10.5]

## Beschreibung

Die vorliegende Erfindung betrifft ein System, welches geeignet ist, anhand eines Bindens einer Prüferkontextinformation an eine Anfragenachricht ein Gerät zuverlässig zu authentisieren sowie ein entsprechendes Verfahren. Die Erfindung betrifft ferner eine Prüferbindungsvorrichtung, welche geeignet ist, eine Anfragenachricht in Abhängigkeit einer Prüferkontextinformation zu modifizieren, sowie ein entsprechendes Verfahren. Die Erfindung betrifft ferner ein Computerprogrammprodukt zur Durchführung mindestens eines der vorgenannten Verfahren sowie einen Datenspeicher, welcher das Computerprogrammprodukt speichert.

Der Vorgang einer Authentisierung ist generell der Vorgang eines Nachweisens einer Identität. Während dieses Vorgangs werden typischerweise Nachrichten zwischen einer Prüfeinheit und einem Gerät, welches zu authentisieren ist, ausgetauscht. Werden diese auszutauschenden Nachrichten von einem Angreifer abgehört, kann dieser Angreifer mittels der abgehörten Nachrichten eine falsche Identität vortäuschen. Die Authentisierung kann zum Beispiel dem zuverlässigen Erkennen eines Gerätes, zum Beispiel eines Sensors oder einer Batterie, dienen. In einem weiteren Einsatzszenario dient die Authentisierung dem Erkennen von Originalprodukten. Auch bei einer Client-Server-Kommunikation kann ein Überprüfen der Identität des Clients bzw. des Servers notwendig sein.

In herkömmlichen Verfahren erfolgt eine Authentisierung oft mittels eines Challenge-Response-Verfahrens. An das Gerät wird hierbei eine Challenge-Nachricht übertragen, welche zum Beispiel in Abhängigkeit einer Zufallszahl gebildet wird. Darauf berechnet das Gerät mittels eines geheimen kryptographischen Schlüssels einen zweiten Wert, der auch als Response-Nachricht bezeichnet wird. Diese Response-Nachricht wird an den Erzeuger der Challenge zurückgeschickt, der daraufhin die Response auf ihre Korrektheit hin überprüft. Da nur ein Originalprodukt, bzw. ein Originalgerät eine korrekte Response-Nachricht berechnen kann, kann somit ein Originalprodukt bzw. ein Originalgerät von einer Fälschung zuverlässig unterschieden werden.

Aus dem ""Handbook of applied cryptography"; IDentification and entity authentication; CRC Press; Boca Ranton; pp 385-424; ISBN: 978-0-8493-8523-0; XP002262234 von Menezes et al. sind elektronische Identifizierungs- und Authentifizierungssysteme und entsprechende Methoden, welche ein Überprüfen von digitalen Identitäten erlauben, bekannt. Challenge-Response-Verfahren werden dabei als sichere Authentifizierungsverfahren beschrieben und beruhen auf der Basis von Wissen eines Teilnehmers, wobei die Korrektheit einer übertragenen Nachricht verifiziert wird."

Bei herkömmlichen Authentisierungsverfahren besteht oftmals die Notwendigkeit, ein Gerät nicht nur lokal, sondern auch entfernt über eine Kommunikationsstelle, zum Beispiel über Internet, Mobilfunk oder weitere Datenverbindungen, zu prüfen. Diese Notwendigkeit besteht insbesondere bei einer Fernwartung des Gerätes. Bei einem entfernten Überprüfen einer Identität entsteht oftmals das Problem, dass eine Zwischeninstanz Nachrichten auslesen und zur Vortäuschung einer falschen Identität verwenden kann. Dieses Angriffsszenario ist als Man-in-the-Middle Angriff bekannt.

In herkömmlichen Verfahren wird eine symmetrische RFID-Tag-Authentisierung angewendet. Hierbei werden Chips verwendet, die kryptographische Operationen ausführen, um damit ein Originalprodukt zuverlässig zu erkennen.

Ein asymmetrisches Kryptosystem besteht aus mehreren miteinander kommunizierenden Instanzen, wobei jede der kommunizierenden Instanzen ein Schlüsselpaar besitzt, das aus einem geheimen Teil und einem nicht-geheimen Teil besteht. Asymmetrische Kryptographieverfahren sind auch als Public-Key-Verfahren bekannt.

Ferner werden in herkömmlichen Verfahren sogenannte Keybinding-Methoden verwendet. Hierbei wird ein kryptographischer Schlüssel an einen bestimmten Verwendungszweck gebunden. Dies erfolgt in herkömmlichen Verfahren zum Beispiel durch eine Schlüsselableitung mittels einer Schlüsselableitungsfunktion, welche als Eingabeparameter neben dem nicht-zweckgebundenen Schlüssel eine Zeichenkette verwendet, die den beabsichtigten Verwendungszweck beschreibt. Als Beispiel hierfür werden bei WiMAX aus einem nicht-zweckgebundenen Schlüssel EMSK erst ein Mobile-IP-Root-Key MIPRK und daraus weitere zweckgebundene mobile IP-Schlüssel berechnet.

Ferner werden in herkömmlichen Verfahren Netzwerksicherheitsprotokolle verwendet, um IP-basierte Kommunikation kryptographisch zu schützen. Dabei erfolgt eine Authentisierung der Kommunikationspartner sowohl einseitig als auch gegenseitig. Oftmals verwendete Protokolle, die eine Authentisierung eines Kommunikationspartners vornehmen, sind als SSL, TLS oder IKE für IPsec bekannt. Die Authentisierung eines Kommunikationspartners, speziell eines http-Servers über SSL oder TLS erfolgt dabei mittels eines digitalen Zertifikats. Dieses Zertifikat enthält neben dem öffentlichen Schlüssel des Servers, auch Public-Key genannt, Information über den Server, insbesondere dessen Bezeichner, wie z. B. Name, DNS-Name oder IP-Adresse.

Ebenfalls aus herkömmlichen Verfahren ist das Kerberos-Protokoll bekannt, mit dessen Hilfe Authentisierung und Autorisierung über eine dritte vertrauenswürdige Partei realisiert werden kann. Kerberos basiert auf der Benutzung von symmetrischen Schlüsseln.

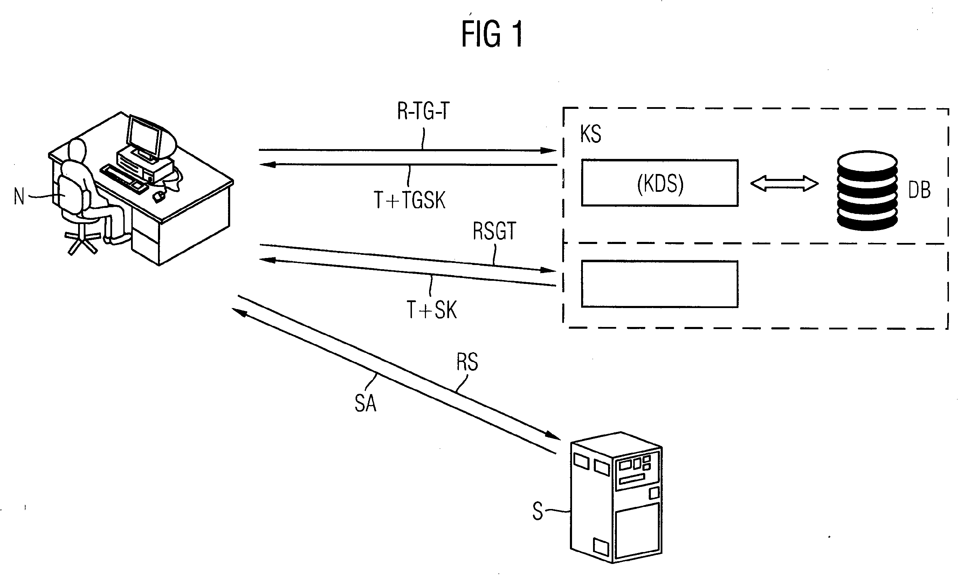

Figur 1 stellt den Authentifizierungsdienst Kerberos gemäß einem herkömmlichen Verfahren dar. Kerberos ist ein verteilter Authentifizierungsdienst bzw. ein Netzwerkprotokoll, das für offene und unsichere Computernetze, wie z. B. dem Internet, entwickelt wurde. Die Authentifizierung übernimmt gemäß Kerberos eine vertrauenswürdige dritte Partei, z. B. ein Kerberos-Server.

Gemäß dem in Figur 1 beschriebenen Kerberos-Verfahren beantragt ein Nutzer bzw. User N in einem ersten Schritt durch eine Anforderungsnachricht bzw. ein Request R-TG-T ein Ticket-Granting-Ticket mittels einer R-TG-T Nachricht von einem Kerberos-Server KS. Ein Ticket ist hierbei eine Berechtigungsnachricht, mit der der jeweilige Besitzer der Nachricht Zugriff auf den Server S bekommt. In einem darauffolgenden Schritt übermittelt der Kerberos-Server KS ein Ticket T und einen Ticket-Granting-Session-Key TGSK an den User N. Zum Übermitteln der beiden Nachrichten Ticket T und Ticket-Granting-Session-Key TGSK verfügt der Kerberos-Server KS über einen Key Distribution Service KDS. Dieser Schlüsselverteilungsdienst KDS kommuniziert mittels einer Datenverbindung mit einer Datenbank DB.

In einem darauffolgenden Verfahrensschritt beantragt der Nutzer N ein Service-Grant-Ticket SGT, wozu der Kerberos-Server KS auf einen Ticket-Granting-Server TGS zugreift. Daraufhin übermittelt der Ticket-Granting-Server TGS eine Ticket-Nachricht T sowie einen Session-Key SK an den Nutzer N. In Abhängigkeit der empfangenen Nachrichten erstellt der Nutzer N eine Request Service-Nachricht RS und übermittelt diese an einen weiteren Server S. In Abhängigkeit eines Überprüfens der Request Service-Nachricht RS übermittelt dieser Server S eine Server Authenticator-Nachricht an den Nutzer N.

Ein weiteres Beispiel für ein Netzwerkprotokoll gemäß einem herkömmlichen Verfahren ist SAML, das auch als Secure Assertion Mark-up Language bekannt ist. Im Unterschied zu Kerberos können in SAML auch asymmetrische Methoden genutzt werden.

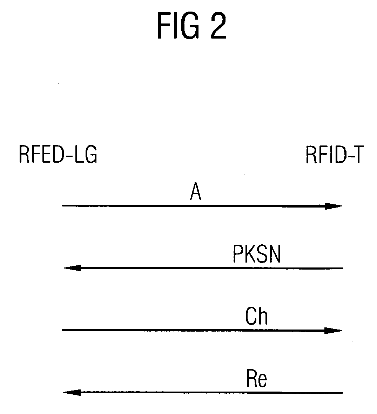

Figur 2 beschreibt eine Geräte-Authentisierung gemäß einem herkömmlichen Verfahren.

Figur 2 zeigt in einer schematischen Darstellung den Nachrichtenaustausch zwischen einem RFID-Lesegerät RFID-LG und einem RFID-Tag RFID-T gemäß einem asymmetrischen Kryptographie-Verfahren. Hierbei wird eine unilaterale Authentisierung des RFID-Tags RFID-T dargestellt. Nach einer Anfrage A (getcertificate) des RFID-Lesegeräts RFID-LG sendet der RFID-Tag sein Zertifikat an das RFID-Lesegerät RFID-LG. Das Zertifikat des RFID-Tags RFID-T weist den öffentlichen Schlüssel des RFID-Tags auf. Das Bereitstellen bzw. das Übersenden des öffentlichen Schlüssels erfolgt z. B. in einer Public Key Signature-Nachricht PKSN. Das Zertifikat des RFID-Tags RFID-T weist eine Unterschrift eines Zertifikatausstellers auf. Für den Fall, dass das RFID-Lesegerät RFID-LG das Zertifikat des RFID-Tags RFID-T nicht erfolgreich verifizieren kann, wird der RFID-Tag RFID-T als nicht original erkannt, was zu einem Abbruch des Verfahrens führt. Wird das Zertifikat als valide bzw. gültig erkannt, generiert das RFID-Lesegerät RFID-LG eine randomisierte Challenge-Anfragenachricht und sendet diese an das RFID-Tag. Das RFID-Tag RFID-T berechnet eine Response-Nachricht Re in Abhängigkeit eines privaten Schlüssels des RFID-Tags RFID-T. Diese Response-Nachricht Re wird an das RFID-Lesegerät RFID-LG übersendet. Das RFID-Lesegerät RFID-LG verifiziert die Response-Nachricht Re unter Verwendung des öffentlichen Schlüssels des RFID-Tags RFID-T. In Abhängigkeit dieser Verifikation wird der RFID-Tag RFID-T akzeptiert oder zurückgewiesen, d. h. als Original oder als Fälschung erkannt.

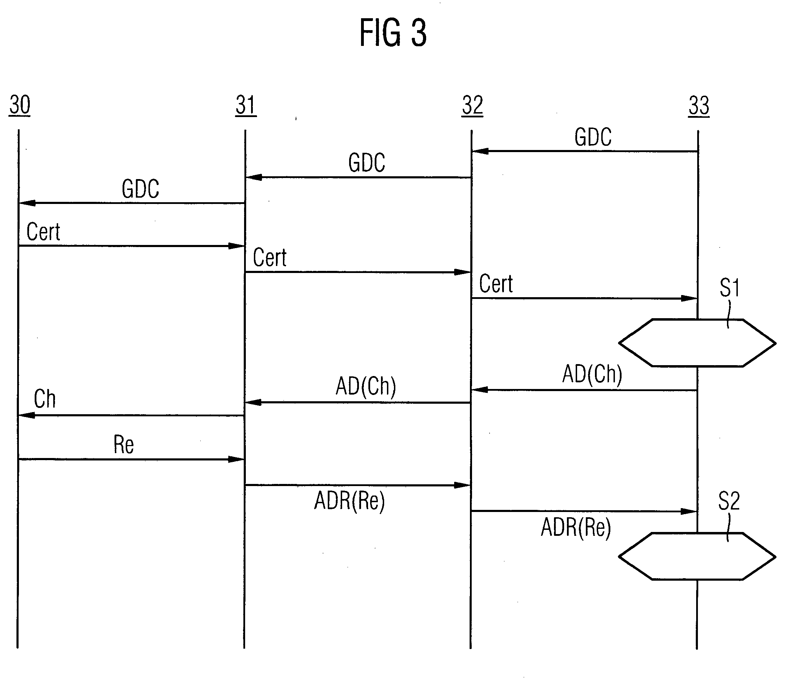

Figur 3 beschreibt ein Angriffs-Szenario bei einer Authentisierung gemäß einem herkömmlichen Verfahren. Die vorliegende Figur 3 dient der Veranschaulichung eines Man-in-the-Middle Angriffs gemäß einem herkömmlichen Challenge Response-Authentisierungsverfahren. Ein Server 33 authentisiert ein Gerät 31 unter Verwendung einer Authentisierungseinheit 30. Hierzu fordert der Server 33 ein Zertifikat Z des Gerätes 31 mittels einer Get_Device_Cert Nachricht GDC an. Bei dem dargestellten Beispiel ist es einem Angreifer 32 gelungen, sich in den Nachrichtenfluss zwischen dem Server 33 und dem Gerät 31 zu schalten, d. h. den Nachrichtenaustausch zwischen dem Server 33 und dem Gerät 31 abzuhören. Die Authentisierungseinheit 30 übermittelt gemäß der Anfrage ein Zertifikat Z in einer Cert-Nachricht Cert an den Server 33. In einem darauffolgenden Verfahrensschritt S1 erzeugt der Server 33 eine Challenge Ch bzw. Anfragenachricht in Abhängigkeit derer die Authentisierungseinheit 30 eine Response-Nachricht Re berechnet. Ein Berechnen der Response-Nachricht Re kann in Abhängigkeit eines Ausführens einer Geräteauthentisierungsmethode AD(Ch) erfolgen. Ein Verifizieren der Response-Nachricht Re kann in Abhängigkeit eines Ausführens einer Antwortauthentisierungsmethode ADR(Re) erfolgen. Der Server 33 verifiziert in einem Schritt S2, ob die Response-Nachricht Re, welche durch die Authentisierungseinheit 30 errechnet wurde, bezüglich der erwarteten Response-Nachricht gemäß der Challenge-Nachricht Ch valide ist.

Somit hat in dem in Figur 3 beschriebenen Angriffs-Szenario der Server 33 das Gerät 31 erfolgreich authentifiziert, wobei jedoch der Angreifer 32 die Nachrichten des Servers 33 lediglich an das Gerät 31 weitergereicht hat. Der Server 33 geht fälschlicherweise davon aus, dass er mit einem Originalgerät kommuniziert. Der Angreifer 32 kann jedoch ein anderes Originalgerät zum Berechnen einer gültigen Gerätauthentisierungs-Response-Nachricht verwenden.

Herkömmliche Methoden zur Authentisierung von Geräten sind oftmals unzuverlässig und können nur unter erheblichen Ressourcen-Aufwand durchgeführt werden. Die Unzuverlässigkeit im herkömmlichen Verfahren kann insbesondere in Abhängigkeit eines Erstellens der Challenge-Nachricht bzw. Anfragenachricht auftreten. Außerdem sind bei herkömmlichen Verfahren eine Vielzahl von Instanzen notwendig, welche den Ressourcen-Bedarf stark erhöhen. Eine Vielzahl von beteiligten Instanzen kann ferner zu einer Unzuverlässigkeit des verwendeten Authentisierungsverfahrens führen, da ausgetauschte Nachrichten zwischen der Vielzahl der Instanzen abgehört und/oder verfälscht werden können.

Es ist daher eine Aufgabe der vorliegenden Erfindung, ein verbessertes System bzw. eine verbesserte Vorrichtung zur zuverlässigen Authentisierung eines Gerätes bzw. zum Modifizieren einer Anfragenachricht in Abhängigkeit einer Prüferkontextinformation bereitzustellen.

Diese Aufgabe wird durch ein System zur zuverlässigen Authentisierung eines Gerätes gemäß Patentanspruch 1 gelöst. Demgemäß ist ein System zur zuverlässigen Authentisierung eines Gerätes vorgesehen, mit:
einer Prüfungsvorrichtung, welche in Abhängigkeit einer Antwortnachricht eine Identität des Gerätes verifiziert, wobei das Gerät die Antwortnachricht in Abhängigkeit einer modifizierten Anfragenachricht berechnet und eine Prüferbindungsvorrichtung die modifizierte Anfragenachricht in Abhängigkeit einer bereitgestellten Kontextinformation und einer bereitgestellten Nachricht berechnet.

Bei einer Authentisierung eines Gerätes kann es sich z. B. um eine Echtheitsüberprüfung eines Sensors oder einer Batterie handeln. Ein Gerät kann auch als eine virtuelle Vorrichtung ausgebildet sein. So eignet sich das erfindungsgemäße System ebenfalls zur zuverlässigen Authentisierung eines Clients und/oder eines Servers. Die Prüfungsvorrichtung kann z. B. als ein Server vorliegen, welcher eine Identität eines Client-Gerätes überprüft. Die Prüferbindungsvorrichtung kann z. B. als eine virtuelle Recheneinheit, ein virtueller und/oder physischer Server vorliegen. Ein Nachrichtenaustausch zwischen der Prüfungsvorrichtung, der Prüferbindungsvorrichtung und dem Gerät kann mittels einer Datenverbindung erfolgen. Die Datenverbindung kann hierbei weitere netzwerktypische Komponenten aufweisen.

Die Prüfungsvorrichtung ist geeignet eine Anfragenachricht, auch Challenge-Nachricht genannt, zu erstellen und diese an die Prüferbindungsvorrichtung zu übermitteln. Das Erstellen der Anfragenachricht kann z. B. in Abhängigkeit einer von der Prüfungsvorrichtung erzeugten Zufallszahl bzw. Pseudozufallszahl erfolgen. Anschließend übermittelt die Prüfungsvorrichtung eine Prüferkontextinformation an die Prüferbindungsvorrichtung. Die Prüferbindungsvorrichtung berechnet in Abhängigkeit der übermittelten Prüferkontextinformation und der Anfragenachricht eine modifizierte Anfragenachricht. Das Errechnen der modifizierten Anfragenachricht kann mittels einer Context-Binding-Funktion durchgeführt werden. Die Context-Binding-Funktion kann als eine Schlüsselableitungsfunktion vorliegen, welche die bereitgestellte Prüferkontextinformation und die bereitgestellte Anfragenachricht als Eingabeparameter verwendet.

Die berechnete modifizierte Anfragenachricht wird bei einer Ausführungsform an das Gerät übermittelt, welches in Abhängigkeit der modifizierten Anfragenachricht eine Antwortnachricht, auch Response-Nachricht genannt, erstellt. Das Erstellen der Response-Nachricht kann unter Verwendung eines kryptographischen Schlüssels erfolgen. Nach dem Berechnen der Response-Nachricht wird diese mittels der Prüferbindungsvorrichtung an die Prüfungsvorrichtung übermittelt. Die Prüfungsvorrichtung ist geeignet, in Abhängigkeit der bereitgestellten Prüferkontextinformation und der bereitgestellten Anfragenachricht den modifizierten Schlüssel zu errechnen. Das Erstellen der modifizierten Anfragenachricht durch die Prüfungsvorrichtung kann analog zum Erstellen der modifizierten Anfragenachricht durch die Prüferbindungsvorrichtung durchgeführt werden. Hierbei kann also bei beiden Berechnungen die gleiche Context-Binding-Funktion und/oder die gleichen Eingabeparameter verwendet werden. In Abhängigkeit der durch die Prüfungsvorrichtung berechneten modifizierten Anfragenachricht ist die Prüfungsvorrichtung geeignet, die von dem Gerät bereitgestellte Response-Nachricht zu verifizieren. Dies erfolgt z. B. mittels einer Response-Verification-Funktion, welche die bereitgestellte Response-Nachricht und/oder die durch die Prüfungsvorrichtung erstellte modifizierte Anfragenachricht als Eingabeparameter verwendet.

Falls die durch das Gerät bereitgestellte Response-Nachricht eine Antwort auf die durch die Prüfungsvorrichtung bereitgestellte Anfragenachricht gemäß dem bereits beschriebenen Challenge-Response-Verfahren darstellt, wird das Gerät als Original-Gerät erkannt. Dies bedeutet, dass das Gerät als der von der Prüfungsvorrichtung tatsächlich angedachte Kommunikationspartner vorliegt und die Identität des Gerätes authentisiert ist.

Bei einer Ausführungsform des erfindungsgemäßen Systems wird die Prüferkontextinformation in Abhängigkeit von mindestens einem Merkmal der Prüfungsvorrichtung erstellt.

Dies hat den Vorteil, dass die modifizierte Anfragenachricht in Abhängigkeit einer bereitgestellten Anfragenachricht und mindestens einem zusätzlichen Parameter, nämlich der Prüferkontextinformation, errechnet wird. Ferner hat dies den Vorteil, dass die Prüfungsvorrichtung eine Response-Nachricht verifiziert, welche bezüglich einer eben durch diese Prüfungsvorrichtung berechneten Anfragenachricht errechnet wurde. Dies trägt wesentlich zu einer zuverlässigen Authentisierung des Gerätes bei.

Bei einer weiteren Ausführungsform des erfindungsgemäßen Systems weist die Prüfungsvorrichtung ein Identitätsmerkmal, eine IP-Adresse, einen Rechnernamen, eine MAC-Adresse, ein Zertifikat, einen Session-Key, einen Schlüssel und/oder ein Authentisierungs-Token auf.

Dies hat den Vorteil, dass die Prüferkontextinformation in Abhängigkeit genau dieser Merkmale der Prüfungsvorrichtung erstellt werden kann. Da sich diese Merkmale auf die Prüfungsvorrichtung beziehen, kann die Prüferkontextinformation nicht von einer dritten Instanz, insbesondere von einem Angreifer, nachgeahmt werden.

Bei einer weiteren Ausführungsform des erfindungsgemäßen Systems weist die Prüfungsvorrichtung eine Prüferkontextinformationsbereitstellungseinheit zum Bereitstellen der Prüferkontextinformationen und/oder eine Anfragenachrichtbereitstellungseinheit zum Bereitstellen der Anfragenachricht auf.

Dies bietet den Vorteil, dass die Prüfungsvorrichtung sowohl die Prüferkontextinformationen als auch die Anfragenachricht eigenständig berechnen kann. Somit können weitere Sicherheitsmechanismen in das vorgeschlagene System integriert werden.

Bei einer weiteren Ausführungsform des erfindungsgemäßen Systems stellt eine Schlüsselverwaltungsvorrichtung KDC die Prüferkontextinformation und/oder die Anfragenachricht bereit.

Dies hat den Vorteil, dass die Prüferkontextinformation und/oder die Anfragenachricht von einer dritten, z. B. besonders vertrauenswürdigen, Einheit bereitgestellt werden. Folglich können bereits implementierte Sicherheitsmechanismen auch in dem vorgeschlagenen System Verwendung finden.

Bei einer weiteren Ausführungsform des erfindungsgemäßen Systems weist die Prüferbindungsvorrichtung eine erste Anfragemodifizierungseinheit auf, welche die modifizierte Anfragenachricht gemäß einer Schlüsselableitungsfunktion in Abhängigkeit der Prüferkontextinformation und der Anfragenachricht berechnet.

Dies bietet den Vorteil, dass bereits implementierte Schlüsselableitungsfunktionen zur Errechnung der modifizierten Anfragenachricht verwendet werden können. Weiterhin hat dies den Vorteil, dass die Prüferbindungsvorrichtung die bereitgestellte Anfragenachricht in Abhängigkeit der Prüferkontextinformation verschlüsseln kann.

Bei einer weiteren Ausführungsform des erfindungsgemäßen Systems verifiziert die Prüfungsvorrichtung die Antwortnachricht mittels einer zweiten Anfragemodifizierungseinheit und einer Antwortverifikationseinheit, wobei die zweite Anfragemodifizierungseinheit die modifizierte Anfragenachricht gemäß der Schlüsselableitungsfunktion berechnet und die Antwortverifikationseinheit die Antwortnachricht in Abhängigkeit der berechneten modifizierten Anfragenachricht verifiziert.

Hierbei kann die Überprüfung bzw. die Verifikation der Antwortnachricht unter Verwendung des gleichen kryptographischen Schlüssels, auch Secret-Key Kryptographie genannt, oder eines zweiten, dem ersten kryptographischen Schlüssel zugeordneten Schlüssel, erfolgen, auch Public-Key Kryptographie genannt.

Dies hat den Vorteil, dass die Verifizierung der Response-Nachricht bzw. der Antwortnachricht in Abhängigkeit einer durch die Prüfungsvorrichtung berechneten modifizierten Anfrageeinheit erfolgt.

Bei einer weiteren Ausführungsform des erfindungsgemäßen Systems wählt eine Auswahleinheit die Schlüsselableitungsfunktion aus einer Menge von auf einem Datenspeicher abgespeicherten Schlüsselableitungsfunktionen aus und stellt die ausgewählte Schlüsselableitungsfunktion mindestens einer der Anfragemodifizierungseinheiten bereit.

Dies hat den besonderen Vorteil, dass eine Schlüsselableitungsfunktion aus einer Vielzahl von Schlüsselableitungsfunktionen ausgewählt werden kann. Hierbei kann vorteilhafterweise die erste als auch die zweite Anfragemodifizierungseinheit die gleiche Schlüsselableitungsfunktion verwenden.

Bei einer weiteren Ausführungsform des erfindungsgemäßen Systems weist die abgespeicherte Menge von Schlüsselableitungsfunktionen MD5, SHA-1, SHA-256, SHA-512, HMAC und/oder CRC32 basierte Verfahren auf.

Dies hat den Vorteil, dass die Schlüsselableitungsfunktion aus einer Vielzahl von bekannten Schlüsselableitungsfunktionen ausgewählt werden kann.

Bei einer weiteren Ausführungsform des erfindungsgemäßen Systems übermittelt das Gerät die berechnete Antwortnachricht an die Prüferbindungsvorrichtung und die Prüferbindungsvorrichtung übermittelt die berechnete Antwortnachricht an die Prüfungsvorrichtung.

Dies bietet den Vorteil, dass Anfrage- und Antwortnachricht von der jeweils gleichen Instanz, nämlich der Prüferbindungsvorrichtung, an die Prüfungsvorrichtung übermittelt werden.

Bei einer weiteren Ausführungsform des erfindungsgemäßen Systems übermittelt das Gerät die berechnete Antwortnachricht an die Prüfungsvorrichtung.

Dies führt zu dem Vorteil, dass das Gerät die berechnete Antwortnachricht direkt an die Prüfungsvorrichtung übermittelt.

Die Aufgabe wird ferner gelöst durch eine Prüferbindungsvorrichtung zur Modifizierung einer Anfragenachricht in Abhängigkeit einer Prüferkontextinformation, mit:
- einer Prüferkontextinformationsschnittstelle zum Empfangen und Bereitstellen der Prüferkontextinformation an eine Prüferbindungseinheit;
- einer Anfragenachrichtschnittstelle zum Empfangen und Bereitstellen einer Anfragenachricht an die Prüferbindungseinheit; und
- der Prüferbindungseinheit, welche eine modifizierte Anfragenachricht in Abhängigkeit der bereitgestellten Prüferkontextinformationen und der bereitgestellten Anfragenachricht berechnet.

Die vorgeschlagene Prüferbindungsvorrichtung kann in einem System gemäß den vorgenannten Ausführungsbeispielen Anwendung finden.

Die Erfindung betrifft ferner ein Verfahren zum zuverlässigen Authentisieren eines Gerätes, insbesondere zum Betreiben eines Systems gemäß einem der vorgenannten.Ausführungsbeispiele, mit den Schritten:
- Berechnen einer modifizierten Anfragenachricht in Abhängigkeit einer bereitgestellten Prüferkontextinformation und einer bereitgestellten Anfragenachricht;
- Berechnen einer Antwortnachricht in Abhängigkeit einer modifizierten Anfragenachricht; und
- Verifizieren einer Identität eines Gerätes in Abhängigkeit der berechneten Antwortnachricht.

Die Erfindung betrifft ferner ein Verfahren zum Modifizieren einer Anfragenachricht in Abhängigkeit einer Prüferkontextinformation, insbesondere zum Betreiben einer Prüferbindungsvorrichtung gemäß einem der vorbeschriebenen Ausführungsbeispiele, mit den Schritten:
- Bereitstellen der Prüferkontextinformation an eine Prüferbindungseinheit;
- Bereitstellen der Anfragenachricht für die Prüferbindungseinheit; und
- Berechnen einer modifizierten Anfragenachricht in Abhängigkeit der bereitgestellten Prüferkontextinformation und der bereitgestellten Anfragenachricht.

Die Erfindung betrifft ferner ein Computerprogrammprodukt zum Betreiben eines Systems nach einem der vorgenannten Ausführungsformen und/oder zum Betreiben einer der vorgenannten Prüferbindungsvorrichtungen.

Die Erfindung betrifft ferner einen Datenspeicher, der das vorgenannte Computerprogrammprodukt abspeichert.

Die Erfindung schafft somit ein System und eine Prüferbindungsvorrichtung mitsamt entsprechender Verfahren, welche es erlauben, mittels einer Bindung einer Anfragenachricht an eine Prüfungsvorrichtung eine sichere Authentisierung eines Gerätes durchzuführen. Das Binden der Anfragenachricht an die Prüfungsvorrichtung erfolgt erfindungsgemäß durch die Prüferbindungsvorrichtung zur Modifizierung einer Anfragenachricht in Abhängigkeit einer Prüferkontextinformation.

Weitere vorteilhafte Ausgestaltungen der Erfindung sind Gegenstand der Unteransprüche sowie der im Folgenden beschriebenen Ausführungsbeispiele.

Im Weiteren wird die Erfindung anhand beispielhafter Implementierungen unter Bezugnahme auf die beigelegten Figuren näher erläutert.

Es zeigen dabei:
- Figur 1: ein Authentisierungsprotokoll gemäß einem herkömmlichen Verfahren;
- Figur 2: ein schematischer Nachrichtenaustausch gemäß einem herkömmlichen Challenge-Response-Verfahren;
- Figur 3: ein Angriffs-Szenario gemäß einem herkömmlichen Manin-the-Middle Verfahren;
- Figur 4: ein System zur zuverlässigen Authentisierung eines Gerätes gemäß einem Ausführungsbeispiel der vorliegenden Erfindung;
- Figur 5: eine Prüferbindungsvorrichtung zur Modifizierung einer Anfragenachricht gemäß einem Ausführungsbeispiel der vorliegenden Erfindung;
- Figur 6: ein Verfahren zum zuverlässigen Authentisieren eines Gerätes gemäß einem Ausführungsbeispiel der vorliegenden Erfindung;
- Figur 7: eine detaillierte Beschreibung eines Verfahrens zum zuverlässigen Authentisieren eines Gerätes gemäß einem Ausführungsbeispiel der vorliegenden Erfindung;
- Figur 8: ein Verfahren zum Modifizieren einer Anfragenachricht in Abhängigkeit einer Prüferkontextinformation gemäß einem Ausführungsbeispiel der vorliegenden Erfindung;
- Figur 9: ein Sequenzdiagramm eines Verfahrens zum zuverlässigen Authentisieren eines Gerätes gemäß einem Ausführungsbeispiel der vorliegenden Erfindung; und
- Figur 10: ein Sequenzdiagramm eines Verfahrens zum zuverlässigen Authentisieren eines Gerätes mit einer Schlüsselverteilungseinheit gemäß einem Ausführungsbeispiel der vorliegenden Erfindung.

In den Figuren sind gleiche bzw. funktionsgleiche Elemente mit den gleichen Bezugszeichen versehen, sofern nichts anderes angegeben ist.

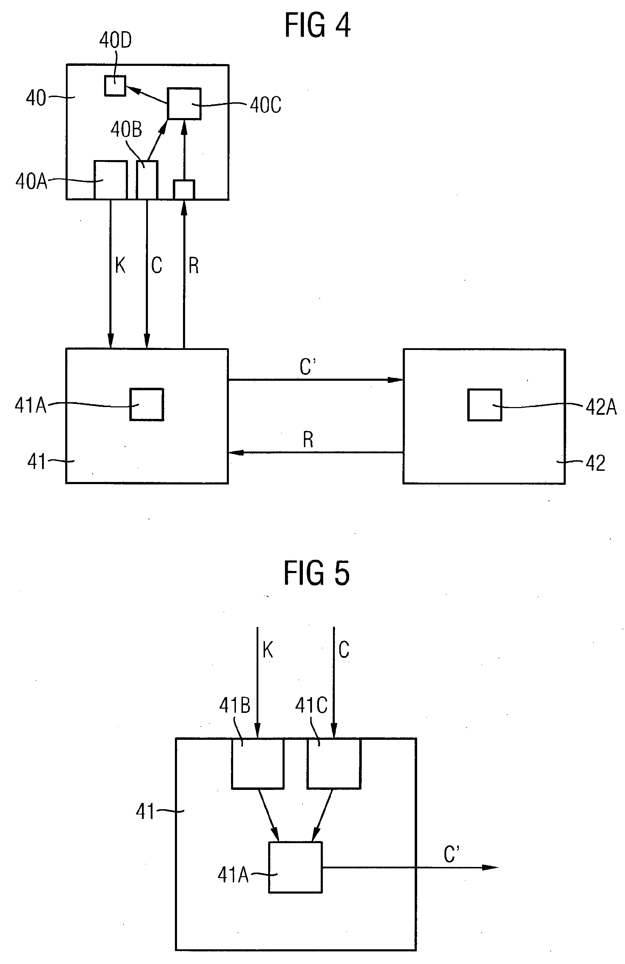

Figur 4 beschreibt ein System zur zuverlässigen Authentisierung eines Gerätes 42. Das System weist eine Prüfungsvorrichtung 40 auf, welche in Abhängigkeit einer empfangenen Antwortnachricht R eine Identität des Gerätes 42 verifiziert. Das Gerät 42 berechnet die Antwortnachricht R in Abhängigkeit einer modifizierten Anfragenachricht C'. Ferner ist eine Prüferbindungsvorrichtung 41 vorgesehen, die eine modifizierte Anfragenachricht C' in Abhängigkeit einer durch die Prüfungsvorrichtung 40 bereitgestellten Prüferkontextinformation K und einer durch die Prüfungsvorrichtung 40 bereitgestellten Anfragenachricht C berechnet.

Die Prüfungsvorrichtung 40 weist in einer Ausführungsform eine Prüferkontextinformationsbereitstellungseinheit 40A, die die Prüfungskontextinformation K generiert auf. Die Prüferkontextinformationsbereitstellungseinheit 40A ist geeignet, Merkmale oder Features der Prüfungsvorrichtung 40 zu bestimmen und/oder diese Merkmale aus einem Datenspeicher auszulesen. Diese Merkmale umfassen z. B. ein Identitätsmerkmal ID, eine IP-Adresse, ein Rechnername, eine MAC-Adresse, ein Zertifikat, ein Session-Key, ein Schlüssel oder ein Authentisierungs-Token der Prüfungsvorrichtung 40.

Zum Erzeugen der Prüferkontextinformation K durch die Prüferkontextinformationsbereitstellungseinheit 40A eignen sich insbesondere für Merkmale eines Servers, wobei die Prüfungsvorrichtung 40, die Prüferbindungsvorrichtung 41, das Gerät 42 oder ein Authentifizierungsdienst als Server agieren kann. Die Prüferkontextinformation kann in Abhängigkeit mindestens eines der folgenden Merkmale errechnet werden:
- eine Server-Identity, z. B. eine IP-Adresse, ein DNS-Rechnername, eine MAC-Adresse, sofern die Prüfer- und die Authentisierungseinheit sich im gleichen Subnetz befinden, d. h. dass sie die eigenen MAC-Adressen zur Adressierung verwenden und nicht diejenigen eines Routers;
- ein Server-Zertifikat bzw. ein Feld oder mehrere Felder des Server-Zertifikats; speziell der Server-Public-Key oder auch der Fingerprint des Zertifikates, der mittels einer Hash-Funktion berechnet wird;
- ein Session Key bzw. ein daraus abgeleiteter Wert der Sicherheitssitzung, der durch das Netzwerksicherheitsprotokoll vereinbart wurde;
- ein preshared Key bzw. die Ableitung eines preshared Keys zwischen einer Prüfer- und einer Authentisierungseinheit;
- ein Authentisierungs-Token, mit dem sich der Server zuvor authentisiert hat;
- soweit eine gegenseitige Authentisierung erfolgt, kann auch die Client-Identity oder auch Client-Zertifikat bzw. Teile davon mitberücksichtigt werden; und/oder
- eine Zufallszahl, welche mittels der Prüferkontextinformationsbereitstellungseinheit 40A erstellt wurde.

In einer weiteren Ausführungsform weist die Prüfungsvorrichtung 40 eine zweite Anfragemodifizierungseinheit 40C auf. Hierbei kann die Anfragemodifizierungseinheit 40C der Anfragemodifizierungseinheit 41A der Prüferbindungsvorrichtung 41 entsprechen. Dabei liegen die beiden Anfragemodifizierungseinheiten 40C und 41A vorzugsweise als zwei getrennte Einheiten vor. Die beiden Anfragemodifizierungseinheiten 40C und die Anfragemodifizierungseinheit 41A können mit einer Auswahleinheit kommunizieren, welche eine Schlüsselableitungsfunktion zur Berechnung der modifizierten Anfragenachricht bereitstellt.

Das Gerät 42 ist geeignet, mittels einer Antwortnachrichtbereitstellungseinheit 42A aus der modifizierten Anfragenachricht C' eine Antwortnachricht bzw. eine Response-Nachricht R abzuleiten. Zum Ableiten der Response-Nachricht R von der modifizierten Anfragenachricht C' können z. B. herkömmliche Schlüsselableitungsverfahren eingesetzt werden.

Die durch das Gerät 42 erzeugte Response-Nachricht R wird an eine Verifikationseinheit 40D, welche z. B. in der Prüfungsvorrichtung 40 vorgesehen ist, gesendet. Die Verifikationseinheit 40D ist geeignet, anhand der empfangenen Response-Nachricht R und der modifizierten Anfragenachricht C' zu bestimmen, ob die von dem Gerät 42 empfangene Response-Nachricht R mit der zu erwartenden Antwort auf die modifizierte Anfragenachricht C' übereinstimmt. Im Falle des Übereinstimmens wird das Gerät 42 positiv authentisiert, d. h. das Gerät 42 hat die erwartete Response-Nachricht R zurückgeschickt.

Figur 5 stellt eine Prüferbindungsvorrichtung 41 zur Modifizierung einer Anfragenachricht C in Abhängigkeit einer Prüferkontextinformation K dar, mit:
einer Prüferkontextinformationsschnittstelle 41B zum Empfangen der Prüferkontextinformation K und zum Bereitstellen an eine Prüferbindungseinheit 41A. Die Prüferbindungsvorrichtung 41 enthält ferner eine Anfragenachrichtschnittstelle 41C zum Empfangen der Anfragenachricht und zum Bereitstellen an die Prüferbindungseinheit 41A. Die Prüferbindungseinheit 41A berechnet eine modifizierte Anfragenachricht C' in Abhängigkeit der bereitgestellten Prüferkontextinformation K und der bereitgestellten Anfragenachricht C.

Die in der vorliegenden Figur 5 beschriebene Prüferbindungsvorrichtung 41 findet z. B. in einem System gemäß Figur 4 Anwendung.

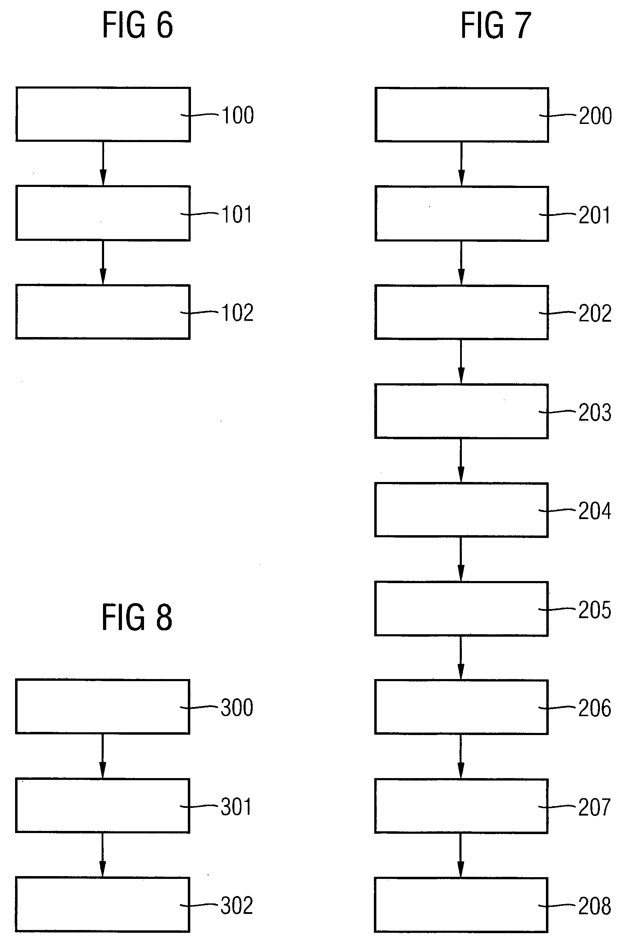

Figur 6 zeigt ein Ablaufdiagramm eines Verfahrens zum zuverlässigen Authentisieren eines Gerätes 42, insbesondere zum Betreiben eines Systems gemäß Figur 4. Das Verfahren umfasst dabei die folgenden Schritte:
In einem Schritt 100 wird eine modifizierte Anfragenachricht C' in Abhängigkeit einer bereitgestellten Prüferkontextinformation K und einer bereitgestellten Anfragenachricht C berechnet.
Anschließend wird in einem Schritt 101 eine Antwortnachricht R in Abhängigkeit der modifizierten Anfragenachricht C' berechnet.
Danach erfolgt in einem Schritt 102 ein Verifizieren einer Identität des Gerätes 42 in Abhängigkeit der Antwortnachricht R.

Die beschriebenen Verfahrensschritte können iterativ und/oder in anderer Reihenfolge ausgeführt werden.

Figur 7 beschreibt ein detailliertes Ablaufdiagramm eines Verfahrens zum zuverlässigen Authentisieren eines Gerätes 42.

In einem vorbereitenden Verfahrensschritt 200 erfolgt ein Bereitstellen der Challenge-Nachricht C durch die Prüfungsvorrichtung 40 an die Prüferbindungsvorrichtung 41. Das Bereitstellen der Challenge-Nachricht C kann weitere Unterschritte aufweisen, wie z. B. das Generieren der Challenge-Nachricht C. Die Challenge-Nachricht C kann z. B. in Abhängigkeit einer Zufallszahl bzw. Pseudozufallszahl generiert werden. Die Challenge-Nachricht kann auch aus mehreren einzelnen Informationen zusammengesetzt sein. Beispielsweise kann die Challenge-Nachricht C einen Zeitstempel aufweisen.

In einem darauffolgenden Verfahrensschritt 201 erfolgt ein Bereitstellen der Prüferkontextinformation K durch die Prüfüngsvorrichtung 40 an die Prüferbindungsvorrichtung 41. Das Bereitstellen der Prüferkontextinformation K kann weitere Subschritte, wie z. B. das Generieren der Prüferkontextinformation K umfassen. Das Generieren der Prüferkontextinformation K kann außerdem ein Auslesen von Merkmalen der Prüfungsvorrichtung 40 umfassen.

Alternativ zu dem in Verfahrensschritt 200 beschriebenen Bereitstellen der Challenge-Nachricht C und des Bereitstellens der Prüferkontextinformation K in einer weiteren Nachricht im Verfahrensschritt 201, können beide Nachrichten gemeinsam in einem Verfahrensschritt der Prüferbindungsvorrichtung 41 bereitgestellt werden. Z. B. können die Challenge-Nachricht C und die Prüferkontextinformation K in einer gemeinsamen Nachricht bzw. einer gemeinsamen Datei übertragen werden.

Alternativ können die Challenge-Nachricht C und die Prüferkontextinformation K durch eine weitere Instanz, z. B. einer Key Distribution-Vorrichtung bzw. einem Key Distribution Center KDC bereitgestellt werden.

In einem darauffolgenden Verfahrensschritt 202 erfolgt ein Berechnen einer Context-Binding-Funktion CB(K; C) = C'. Die Context-Binding-Funktion CB dient dem Binden der Prüferkontextinformation K an die Challenge-Nachricht C zum Erzeugen der modifizierten Challenge-Nachricht C'. Der Verfahrensschritt 202 kann weitere Unterschritte aufweisen, wie z. B. das Auswählen der Context-Binding-Funktion CB() bzw. das Bereitstellen der Context-Binding-Funktion CB() durch Auslesen aus einem Datenspeicher. Die erzeugte modifizierte Challenge-Nachricht C' kann alternativ auch als kontextspezifische Challenge C' benannt werden.

In einem darauffolgenden Verfahrensschritt 203 erfolgt ein Übermitteln der modifizierten Challenge-Nachricht C' an das Gerät 42.

In einem darauffolgenden Verfahrensschritt 204 erfolgt ein Berechnen der Response-Nachricht R in Abhängigkeit der bereitgestellten modifizierten Challenge-Nachricht C'. Das Berechnen der Response-Nachricht R erfolgt mit einer Schlüsselableitungsfunktion f(C') = R. Das Bereitstellen der Response-Nachricht R kann weitere Unterschritte, wie z. B. das Auswählen der Schlüsselableitungsfunktion f() umfassen. Ferner kann das Berechnen der Antwortnachricht eher unter Verwendung eines kryptographischen Schlüssels erfolgen.

In einem darauffolgenden Verfahrensschritt 205 erfolgt ein Übermitteln der Response-Nachricht R von dem Gerät 42 an die Prüferbindungsvorrichtung 41. In einem darauffolgenden Verfahrensschritt 206 übermittelt die Prüferbindungsvorrichtung 41 die Response-Nachricht R an die Prüfungsvorrichtung 40. Es erfolgt somit ein Weiterleiten der Response-Nachricht R von dem Gerät 42 an die Prüfungsvorrichtung 40. In einem zu den Verfahrensschritten 205 und 206 alternativen Verfahrensschritt wird die Response-Nachricht R direkt von dem Gerät 42 an die Prüfungsvorrichtung 40 übermittelt.

In einem darauffolgenden Verfahrensschritt 207 erfolgt ein Berechnen der Context-Binding-Informationen CB(K; C) = C'. Hierzu kann es erforderlich sein, dass die Prüferbindungsvorrichtung 41 die Prüferkontextinformation K an die Prüfungsvorrichtung 40 übermittelt. Die bereitgestellte Prüferkontextinformation K dient als Eingabeparameter der Context-Binding-Funktion CB(K; C). Somit wird in dem Verfahrensschritt 207 analog zu dem Verfahrensschritt 202 die Context-Binding-Funktion für die Prüferkontextinformation K und die Challenge-Nachricht C berechnet.

In einem darauffolgenden Verfahrensschritt 208 erfolgt ein Verifizieren der in Verfahrensschritt 206 bereitgestellten Response-Nachricht R und der in Verfahrensschritt 207 errechneten modifizierten Anfragenachricht C'. Folglich wird in dem Verfahrensschritt 208 überprüft, ob die in dem Verfahrensschritt 206 bereitgestellte Response-Nachricht R mit der erwarteten Antwort auf den Verfahrensschritt 200 bereitgestellte Anfragenachricht bzw. Challenge-Nachricht C darstellt. Die Verifikationsfunktion, welche in Verfahrensschritt 208 Anwendung findet, kann z. B. als Response Verification-Funktion RV(R; C') bezeichnet werden. Als Rückgabewert liefert diese Response-Verifications Funktion RV() einen Bool'schen Wert, welcher angibt, ob es sich bei der in Verfahrensschritt 206 bereitgestellten Response-Nachricht R um die auf die modifizierte Challenge-Nachricht C' erwartete Antwort handelt. Es wird somit in dem Verfahrensschritt 208 unter Verwendung der bereits verwendeten Parameter die Identität des Gerätes 42 überprüft.

Die beschriebenen Verfahrensschritte können iterativ und/oder in anderer Reihenfolge ausgeführt werden.

Figur 8 beschreibt ein Verfahren zum Modifizieren einer Anfragenachricht C in Abhängigkeit einer Prüferkontextinformation K insbesondere zum Betreiben einer Prüferbindungsvorrichtung 41 gemäß Figur 5, mit den folgenden Schritten:
In einem Verfahrensschritt 300 erfolgt ein Bereitstellen der Prüferkontextinformation K an eine Prüferbindungseinheit 41. Daraufhin erfolgt ein Bereitstellen 301 der Anfragenachricht C an die Prüferbindungseinheit 41. Ferner erfolgt ein Berechnen 302 einer modifizierten Anfragenachricht C' in Abhängigkeit der bereitgestellten Prüferkontextinformation K und der bereitgestellten Anfragenachricht C.

Die vorbeschriebenen Verfahrensschritte können iterativ und/oder in anderer Reihenfolge ausgeführt werden.

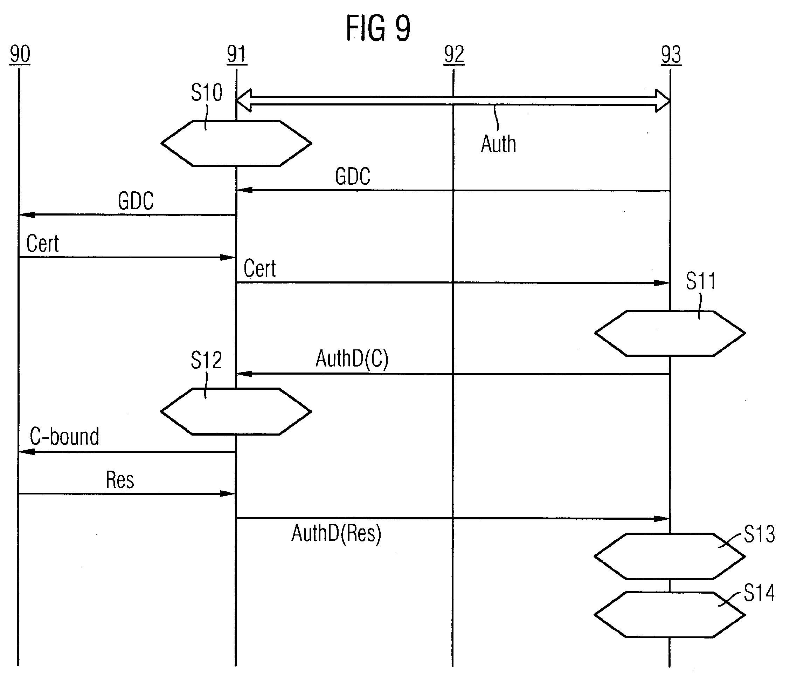

Figur 9 beschreibt ein detailliertes Sequenzdiagramm einer Ausführungsform des Verfahrens zum zuverlässigen Authentisieren eines Gerätes 42. Hierbei kommuniziert ein Server 93 mit einem Gerät 91 mittels dem M2M-Modul 92. Das M2M-Modul 92 kann z. B. als eine netzwerktypische Komponente vorliegen.

Das Gerät 91 baut über das M2M-Modul 92 eine SSL-Verbindung zu dem Server 93 auf. Hierbei sind die einzelnen Nachrichten eines SSL-Verbindungsaufbaus nicht dargestellt. In dem vorliegenden Ausführungsbeispiel authentisieren sich Server 93 und das Gerät 91 in einem Authentisierungsprozess Auth. In einem Verfahrensschritt S10 erfolgt ein Speichern der Server 10. Anschließend sendet der Server 93 eine get_device_cert GDC an das Gerät 91. Diese get_device_cert Nachricht GDC wird von dem Gerät 91 an eine Device-Authentisierungseinheit 90 übermittelt. Diese Device-Authentisierungseinheit 90 übermittelt ein Cert an das Gerät 91, welches die Cert-Nachricht an den Server 93 weiterleitet. In einem Verfahrensschritt S11 erfolgt ein Erstellen einer Anfragenachricht durch den Server 93. Der Server 93 veranlasst einen Methodenaufruf einer Authentisierungsmethode AuthD(c).

In einem darauffolgenden Verfahrensschritt S12 erfolgt ein Ableiten der Anfragenachricht C-Bound. Dies kann beispielsweise mittels folgender Anweisung erfolgen:
Derive Challenge C-Bound: = KDF(C, Server_ID)

Die errechnete C-Bound-Nachricht wird von dem Gerät 91 an die Device-Authentisierungseinheit 90 übermittelt. Diese Device-Authentisierungseinheit 90 übermittelt daraufhin eine Antwortnachricht Res an das Gerät 91. Das Gerät 91 veranlasst daraufhin einen Methodenaufruf AuthD(res).

In einem Verfahrensschritt S13 erfolgt ein erneutes Ableiten der Anfragenachricht C-Bound.

Somit wird in dem vorliegenden Ausführungsbeispiel die Anfragenachricht C-Bound in Abhängigkeit einer Server_ID des Servers 93 erstellt. Somit wird in Verfahrensschritt S12 eine modifizierte Anfragenachricht gemäß einer durch den Server 93 bereitgestellten Anfragenachricht und einer Server_ID des Servers 93 erstellt.

Die beschriebenen Verfahrensschritte können iterativ und/oder in anderer Reihenfolge ausgeführt werden.

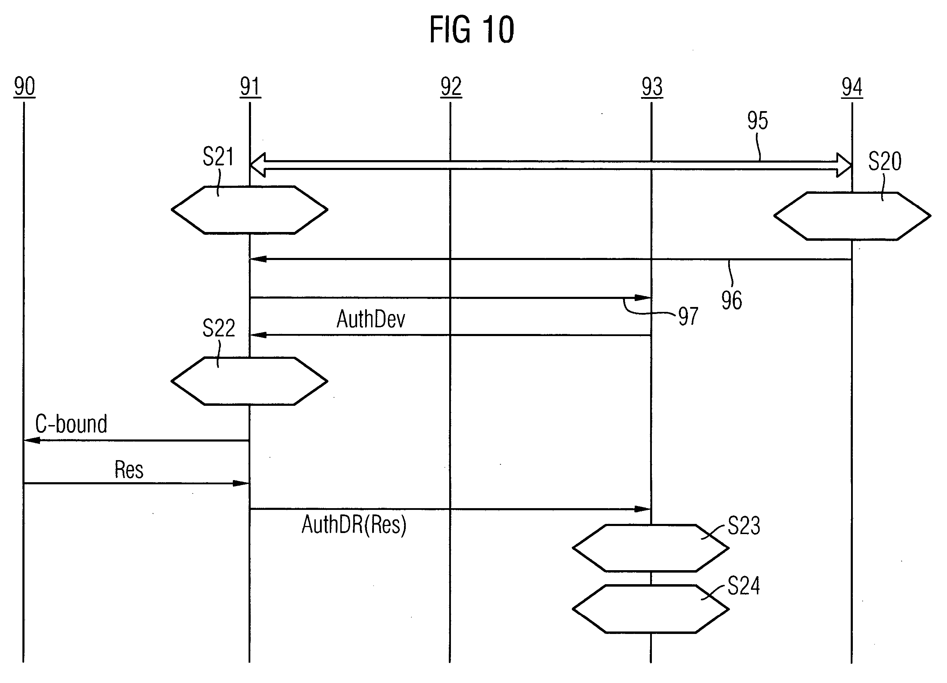

Figur 10 zeigt ein detailliertes Sequenzdiagramm eines Verfahrens zur zuverlässigen Authentisierung eines Gerätes 42 mit einer Authentisierung durch eine dritte vertrauenswürdige Instanz.

Im vorliegenden Ausführungsbeispiel wird dem erfindungsgemäßen Verfahren, wie es in Figur 9 beschrieben ist, eine weitere Instanz, nämlich eine Key Distribution Center-Vorrichtung 94 hinzugefügt. Somit erfolgt eine SSL-Server-Side-Authentisierung zwischen dem Gerät 91 und dem Server 93 mittels eines Server Zertifikates sowie eine Geräteauthentisierung mittels einem Token des KDC-Servers 94.

In dem vorliegenden Ausführungsbeispiel erfolgt ein Authentisieren sowie ein Anfragen einer Autorisation und Anfragen einer Anfragenachricht gemäß dem in der vorliegenden Figur 10 dargestellten doppelseitigen Pfeil 95.

In einem Verfahrensschritt S20 erfolgt ein Erstellen einer Anfragenachricht C_Bound durch einen Schlüsselverteilungsdienst 94, auch Key Distribution Center 94 genannt.

In einem darauffolgenden Verfahrensschritt S21 erfolgt ein Abspeichern einer Server_ID durch das Gerät 91. Anschließend erfolgt ein Übersenden einer Token-Nachricht mit einer Autorisierungsinformation und der in Verfahrensschritt S20 berechneten Anfragenachricht C_Bound gemäß dem in der vorliegenden Figur dargestellten Nachrichtenaustausch 96. Das Gerät 91 fragt daraufhin bei dem Server mittels der in dem Verfahrensschritt S20 berechneten Anfragenachricht C_Bound mittels einem Nachrichtenaustausch 97 einen Dienst an. Der Server 93 übersendet daraufhin eine Authentifikationsnachricht AuthDev an das Gerät 91. Folglich liegen dem Gerät 91 sowohl die Anfragenachricht C_Bound als auch die Server_ID vor.

In einem darauffolgenden Verfahrensschritt S22 erfolgt das Binden der Prüferkontextinformation K bzw. Server_ID an die Anfragenachricht C_Bound. Dies erfolgt in dem vorliegenden Ausführungsbeispiel durch das Gerät 91. Eine mögliche Implementierung dieses Bindens erfolgt z. B. durch folgenden Quelltext:
Derive Challenge C-Bound: = KDF(C_Bound, Server_ID).

Die in dem Verfahrensschritt S22 errechnete C-Bound Nachricht wird anschließend an eine Device-Authentisierungsnachricht 90 übermittelt. Diese Device-Authentisierungseinheit 90 berechnet daraufhin eine Antwortnachricht Res und übermittelt diese an das Gerät 91. Das Gerät 91 veranlasst daraufhin ein Ausführen einer Authentisierungsmethode mit dem Eingabeparameter Res.

Folglich erfolgt in einem Verfahrensschritt S23 ein zweites Ableiten der Anfragenachricht C_Bound durch den Server 93. Dieses zweite Ableiten kann z. B. mittels der folgenden Anweisung implementiert werden:
Device Challenge C-Bound: = KDF(C_Bound, Server_ID).

In einem weiteren Verfahrensschritt S24 erfolgt ein Verifizieren der übermittelten Antwortnachricht Re durch den Server 93.

Folglich wurde in dem vorliegenden Ausführungsbeispiel ein Authentisieren des Gerätes 91 mittels einer Prüferkontextinformation K, im vorliegenden Ausführungsbeispiel auch Server_ID genannt, ausgeführt. Hierzu wurde die Anfragenachricht C_Bound mittels der Server_ID zu einer modifizierten Anfragenachricht C', im vorliegenden Ausführungsbeispiel auch C-Bound genannt, gebunden.

Im Vergleich zu dem in Figur 9 beschriebenen Ausführungsbeispiel wurde folglich in dem in Figur 10 beschriebenen Ausführungsbeispiel eine Authentisierung mittels einer dritten vertrauenswürdigen Instanz, nämlich der Key Distribution Center-Vorrichtung 94, durchgeführt.

Die vorbeschriebenen Verfahrensschritte können iterativ und/oder in anderer Reihenfolge ausgeführt werden.

## Patentansprüche

1. Prüferbindungsvorrichtung (41) zur Modifizierung einer Anfragenachricht (C) in Abhängigkeit von einer Prüferkontextinformation (K) mit:
- einer Prüferkontextinformationsschnittstelle (41B) zum Empfangen der Prüferkontextinformation (K) von einer Prüferkontextinformationsbereitstellungseinheit (40A) einer Prüfungsvorrichtung (40) und zum Bereitstellen der Prüferkontextinformation (K) an eine Prüferbindungseinheit ( 41A) ;
- einer Anfragenachrichtschnittstelle (41C) zum Empfangen der Anfragenachricht (C) von einer Anfragenachrichtbereitstellungseinheit (40B) der Prüfungsvorrichtung (40) und zum Bereitstellen der Anfragenachricht (C) an die Prüferbindungseinheit (41A); und
- der Prüferbindungseinheit (41A), welche eine modifizierte Anfragenachricht (C') mittels einer Context-Binding-Funktion in Abhängigkeit von der bereitgestellten Prüferkontextinformation (K) und der bereitgestellten Anfragenachricht (C) berechnet zum Übermitteln an ein durch die Prüfungsvorrichtung (40) zu authentisierendes Gerät(42),
wobei die Prüferbindungsvorrichtung (41) die empfangene Anfragenachricht (C) mittels der Prüferkontextinformation (K) an die Prüfungsvorrichtung (40) bindet,
wobei eine Authentizität des Gerätes (42) anhand einer von dem Gerät (42) bereitgestellten Response-Nachricht (R) auf die modifizierte Anfragenachricht (C') durch die Prüfungsvorrichtung (40) überprüfbar ist.

2. System zur zuverlässigen Authentisierung eines Gerätes (42), mit:
- einer Prüfungsvorrichtung (40), welche in Abhängigkeit von einer Antwortnachricht (R) eine Identität des Gerätes (42) verifiziert,
- einer Prüferbindungsvorrichtung (41) gemäß Anspruch 1
- dem Gerät (42), wobei das Gerät (42) die Antwortnachricht (R) in Abhängigkeit von der modifizierten Anfragenachricht (C') berechnet.

3. System nach Anspruch 2, wobei die Prüferkontextinformation (K) in Abhängigkeit von mindestens einem Merkmal der Prüfungsvorrichtung (40) erstellt wird.

4. System nach Anspruch 3, wobei die Prüfungsvorrichtung (40) ein Identitätsmerkmal, eine IP-Adresse, einen Rechnernamen, eine MAC-Adresse, ein Zertifikat, einen Session-Key, einen Schlüssel und/oder ein Authentisierungs-Token aufweist.

5. System nach einem der Ansprüche 2 bis 4, wobei eine Schlüsselverwaltungsvorrichtung KDC (94) die Prüferkontextinformation (K) und/oder die Anfragenachricht (C) bereitstellt.

6. System nach einem der Ansprüche 2 bis 5, wobei die Prüferbindungsvorrichtung (41) eine erste Anfragemodifizierungseinheit (41A) aufweist, welche die modifizierte Anfragenachricht (C') gemäß einer Schlüsselableitungsfunktion in Abhängigkeit der Prüferkontextinformation (K) und der Anfragenachricht (C) berechnet.

7. System nach Anspruch 6, wobei die Prüfungsvorrichtung (40) die Antwortnachricht (R) mittels einer zweiten Anfragemodifizierungseinheit (40C) und einer Antwortverifikationseinheit (40D) verifiziert, wobei die zweite Anfragemodifizierungseinheit (40C) die modifizierte Anfragenachricht (C') gemäß der Schlüsselableitungsfunktion berechnet und die Antwortverifikationseinheit (40D) die Antwortnachricht (R) in Abhängigkeit der berechneten modifizierten Anfragenachricht (C') verifiziert.

8. System nach Anspruch 6 oder 7, wobei eine Auswahleinheit die Schlüsselableitungsfunktion aus einer Menge von auf einem Datenspeicher abgespeicherten Schlüsselableitungsfunktionen auswählt und die ausgewählte Schlüsselableitungsfunktion mindestens einer der Anfragemodifizierungseinheiten (41A; 40C) bereitstellt.

9. System nach Anspruch 8, wobei die abgespeicherte Menge von Schlüsselableitungsfunktionen aufweist: MD5, SHA-1, SHA-256, SHA-512, HMAC und CRC32.

10. System nach einem der Ansprüche 2 bis 9, wobei das Gerät (42) die berechnete Antwortnachricht (R) an die Prüferbindungsvorrichtung (41) übermittelt und die Prüferbindungsvorrichtung (41) die berechnete Antwortnachricht (R) an die Prüfungsvorrichtung (40) übermittelt.

11. System nach einem der Ansprüche 2 bis 9, wobei das Gerät (42) die berechnete Antwortnachricht (R) an die Prüfungsvorrichtung (40) übermittelt.

12. Computerprogrammprodukt zum Betreiben eines Systems nach einem der Ansprüche 2 bis 11 und/oder zum Betreiben einer Prüferbindungsvorrichtung (41) nach Anspruch 1.

13. Datenspeicher, der das Computerprogrammprodukt nach Anspruch 12 abspeichert.

14. Verfahren zum Modifizieren einer Anfragenachricht (C) in Abhängigkeit von einer Prüferkontextinformation (K), wobei eine Prüferbindungsvorrichtung (41) die folgenden Schritte ausführt:
- Empfangen der Prüferkontextinformation (K) mittels einer Prüferkontextinformationsschnittstelle (41B) von einer Prüferkontextinformationsbereitstellungseinheit (40A) einer Prüfungsvorrichtung (40) und Bereitstellen der Prüferkontextinformation (K) an eine Prüferbindungseinheit (41A);
- Empfangen der Anfragenachricht (C) mittels einer Anfragenachrichtschnittstelle (41C) von einer Anfragenachrichtbereitstellungseinheit (40B) der Prüfungsvorrichtung (40) und Bereitstellen der Anfragenachricht (C) an die Prüferbindungseinheit (41A); und
- Berechnen einer modifizierten Anfragenachricht (C'), wobei die Prüferbindungseinheit (41A) auf der Prüferbindungsvorrichtung (41) vorgesehen ist mit einer Context-Binding-Funktion und mittels der Context-Binding-Funktion die modifizierte Anfragenachricht (C') in Abhängigkeit von der bereitgestellten Prüferkontextinformation (K) und der bereitgestellten Anfragenachricht (C) berechnet und an ein durch die Prüfungsvorrichtung (40) zu authentisierendes Gerät(42) übermittelt, wobei die Context-Binding-Funktion die empfangene Anfragenachricht (C) mittels der Prüferkontextinformation (K) an die Prüfungsvorrichtung (40) bindet,
wobei eine Authentizität des Gerätes (42) anhand einer von dem Gerät (42) bereitgestellten Response-Nachricht auf die modifizierte Anfragenachricht (C') durch die Prüfungsvorrichtung (40) überprüfbar ist.

## Claims

1. Examiner-linking apparatus (41) for modifying a challenge message (C) as a function of examiner-context information (K), having:
- an examiner-context-information interface (41B) for receiving the examiner-context information (K) from an examiner-context-information provisioning unit (40A) of an examination apparatus (40) and for making the examiner-context information (K) available to an examiner-linking unit (41A);
- a challenge-message interface (41C) for receiving the challenge message (C) from a challenge-message provisioning unit (40B) of the examination apparatus (40) and making the challenge message (C) available to the examiner-linking unit (41A); and
- the examiner-linking unit (41A) which computes a modified challenge message (C') using a context-binding function as a function of the examiner-context information (K) and challenge message (C) that have been made available, for transmission to a device (42) requiring to be authenticated by the examination apparatus (40),
wherein the examiner-linking apparatus (41) binds the received challenge message (C) to the examination apparatus (40) using the examiner-context information (K),
wherein an authenticity of the device (42) can be checked by the examination apparatus (40) on the basis of a response message (R) provided by the device (42) to the modified challenge message (C').

2. System for reliably authenticating a device (42), having:
- an examination apparatus (40) which verifies an identity of the device (42) as a function of a response message (R),
- an examiner-linking apparatus (41) according to claim 1
- the device (42), wherein the device (42) computes the response message (R) as a function of the modified challenge message (C').

3. System according to claim 2, wherein the examiner-context information (K) is created as a function of at least one feature of the examination apparatus (40).

4. System according to claim 3, wherein the examination apparatus (40) has an identity feature, an IP address, a computer name, a MAC address, a certificate, a session key, a key, and/or an authentication token.

5. System according to one of claims 2 to 4, wherein a key-administering device KDC (94) makes the examiner-context information (K) and/or challenge message (C) available

6. System according to one of claims 2 to 5, wherein the examiner-linking apparatus (41) has a first challenge-modifying unit (41A) which computes the modified challenge message (C') according to a key-derivation function as a function of the examiner-context information (K) and challenge message (C).

7. System according to claim 6, wherein the examination apparatus (40) verifies the response message (R) by means of a second challenge-modifying unit (40C) and a response-verification unit (40D), wherein the second challenge-modifying unit (40C) computes the modified challenge message (C') according to the key-derivation function and the response-verification unit (40D) verifies the response message (R) as a function of the computed modified challenge message (C') .

8. System according to claim 6 or 7, wherein a selection unit selects the key-derivation function from a set of key-derivation functions stored in a data memory and makes the selected key-derivation function available to at least one of the challenge-modifying units (41A; 40C).

9. System according to claim 8, wherein the stored set of key-derivation functions has MD5, SHA-1, SHA-256, SHA-512, HMAC, and CRC32.

10. System according to one of claims 2 to 9, wherein the device (42) conveys the computed response message (R) to the examiner-linking apparatus (41) and the examiner-linking apparatus (41) conveys the computed response message (R) to the examination apparatus (40).

11. System according to one of claims 2 to 9, wherein the device (42) conveys the calculated response message (R) to the examination apparatus (40).

12. Computer-program product for operating a system according to one of claims 2 to 11 and/or for operating an examiner-linking apparatus (41) according to claim 1.

13. Data memory that stores the computer-program product according to claim 12.

14. Method for modifying a challenge message (C) as a function of examiner-context information (K), wherein an examiner-linking apparatus (41) performs the following steps:
- receiving the examiner-context information (K) from an examiner-context-information provisioning unit (40A) of an examination apparatus (40) using an examiner-context-information interface (41B) and making the examiner-context information (K) available to an examiner-linking unit (41A);
- receiving the challenge message (C) from a challenge-message provisioning unit (40B) of the examination apparatus (40) using a challenge-message interface (41C) and making the challenge message (C) available to the examiner-linking unit (41A); and
- calculating a modified challenge message (C'), wherein the examiner-linking unit (41A) is provided on the examiner-linking apparatus (41) with a context-binding function and computes the modified challenge message (C') using the context-binding function as a function of the examiner-context information (K) and challenge message (C) that have been made available and conveys it to a device (42) requiring to be authenticated by the examination apparatus (40), wherein the context-binding function binds the received challenge message (C) to the examination apparatus (40) using the examiner-context information (K),
wherein an authenticity of the device (42) can be checked by the examination apparatus (40) on the basis of a response message provided by the device (42) to the modified challenge message (C').

## Revendications

1. Dispositif de liaison de contrôleur (41) pour la modification d'un message d'interrogation (C) en fonction d'une information contextuelle de contrôleur (K) avec .
- une interface d'information contextuelle de contrôleur (41B) pour la réception de l'information contextuelle de contrôleur (K) d'une unité de production d'une information contextuelle de contrôleur (40A) d'un dispositif de contrôle (40) et pour la production de l'information contextuelle de contrôleur (K) sur une unité de liaison de contrôleur (41A) ;
- une interface de message d'interrogation (41C) pour la réception du message d'interrogation (C) d'une unité de production d'un message d'interrogation (40B) du dispositif de contrôle (40) et pour la production du message d'interrogation (C) dans l'unité de liaison de contrôleur (41A) ; et
- l'unité de liaison de contrôleur (41A) qui calcule un message d'interrogation modifié (C') au moyen d'une fonction de liaison contextuelle en fonction de l'information contextuelle de contrôleur (K) produite et du message d'interrogation (C) produit pour la transmission à un appareil (42) à authentifier par le dispositif de contrôle (40),
dans lequel le dispositif de liaison de contrôleur (41) relie le message d'interrogation (C) reçu au dispositif de contrôle (40) au moyen de l'information contextuelle de contrôleur (K),
dans lequel une authenticité de l'appareil (42) à l'aide d'un message de réponse (R) produit par l'appareil (42) peut être vérifiée par le dispositif de contrôle (40) sur le message d'interrogation modifié (C').

2. Système pour l'authentification fiable d'un appareil (42), avec :
- un dispositif de contrôle (40) qui vérifie une identité de l'appareil (42) en fonction d'un message de réponse (R),
- un dispositif de liaison de contrôleur (41) selon la revendication 1
- l'appareil (42), l'appareil (42) calculant le message de réponse (R) en fonction du message d'interrogation modifié (C').

3. Système selon la revendication 2, dans lequel l'information contextuelle de contrôleur (K) est élaborée en fonction d'au moins une caractéristique du dispositif de contrôle (40).

4. Système selon la revendication 3, dans lequel le dispositif de contrôle (40) possède une caractéristique d'identité, une adresse IP, un nom de calculateur, une adresse MAC, un certificat, un code de session, une clé et/ou un jeton d'authentification.

5. Système selon l'une des revendications 2 à 4, dans lequel un dispositif de gestion de clé KDC (94) produit l'information contextuelle de contrôleur (K) et/ou le message d'interrogation (C).

6. Système selon l'une des revendications 2 à 5, dans lequel le dispositif de liaison de contrôleur (41) comprend une première unité de modification d'interrogation (41A) qui calcule le message d'interrogation modifié (C') selon une fonction dérivée de la clé en fonction de l'information contextuelle de contrôleur (K) et du message d'interrogation (C).

7. Système selon la revendication 6, dans lequel le dispositif de contrôle (40) vérifie le message de réponse (R) au moyen d'une deuxième unité de modification d'interrogation (40C) et d'une unité de vérification de réponse (40D), dans lequel la deuxième unité de modification d'interrogation (40C) calcule le message d'interrogation modifié (C') selon la fonction dérivée de la clé, et l'unité de vérification de réponse (40D) vérifie le message de réponse (R) en fonction du message d'interrogation modifié (C') calculé.

8. Système selon la revendication 6 ou 7, dans lequel une unité de sélection sélectionne la fonction dérivée de la clé à partir d'une quantité de fonctions dérivées de la clé mémorisées par une mémoire de données, et la fonction dérivée de la clé sélectionnée produit au moins l'une des unités de modification d'interrogation (41A ; 40C).

9. Système selon la revendication 8, dans lequel la quantité mémorisée de fonctions dérivées de la clé comprend : MD5, SHA-1, SHA-256, SHA-512, HMAC et CRC32.

10. Système selon l'une des revendications 2 à 9, dans lequel l'appareil (42) transmet le message de réponse (R) calculé au dispositif de liaison de contrôleur (41), et le dispositif de liaison de contrôleur (41) transmet le message de réponse (R) calculé au dispositif de contrôle (40).

11. Système selon l'une des revendications 2 à 9, dans lequel l'appareil (42) transmet le message de réponse (R) calculé au dispositif de contrôle (40).

12. Produit de programme informatique pour la commande d'un système selon l'une des revendications 2 à 11, et/ou pour la commande d'un dispositif de liaison de contrôleur (41) selon la revendication 1.

13. Mémoire de données qui mémorise le produit de programme informatique selon la revendication 12.

14. Procédé pour modifier un message d'interrogation (C) en fonction d'une information contextuelle de contrôleur (K), dans lequel un dispositif de liaison de contrôleur (41) effectue les étapes suivantes :
- réception de l'information contextuelle de contrôleur (K) au moyen d'une interface d'information contextuelle de contrôleur (41B) d'une unité de production d'une information contextuelle de contrôleur (40A) d'un dispositif de contrôle (40) et production de l'information contextuelle de contrôleur (K) dans une unité de liaison de contrôleur (41A) ;
- réception du message d'interrogation (C) au moyen d'une interface de message d'interrogation (41C) d'une unité de production d'un message d'interrogation (40B) du dispositif de contrôle (40) et production du message d'interrogation (C) dans l'unité de liaison de contrôleur (41A) ; et
- calcul d'un message d'interrogation modifié (C'), l'unité de liaison de contrôleur (41A) étant prévue sur le dispositif de liaison de contrôleur (41) avec une fonction de liaison contextuelle et au moyen de la fonction de liaison contextuelle le message d'interrogation modifié (C') étant calculé en fonction de l'information contextuelle de contrôleur (K) produite et du message d'interrogation (C) produit, et étant transmis à un appareil (42) à authentifier par le dispositif de contrôle (40), la fonction de liaison contextuelle reliant le message d'interrogation (C) reçu au moyen de l'information contextuelle de contrôleur (K) au dispositif de contrôle (40),
dans lequel une authenticité de l'appareil (42) peut être vérifiée à l'aide d'un message de réponse produit par l'appareil (42) sur le message d'interrogation modifié (C'), par le dispositif de contrôle (40).
